(19) **Europäisches Patentamt / European Patent Office / Office européen des brevets**

(11) **EP 2 808 884 A1**

(12) **EUROPEAN PATENT APPLICATION**
published in accordance with Art. 153(4) EPC

(43) Date of publication:
03.12.2014 Bulletin 2014/49

(51) Int Cl.:
*H01J 35/08* (2006.01)    *C22C 14/00* (2006.01)
*H01J 35/18* (2006.01)

(21) Application number: 12866569.2

(22) Date of filing: 23.01.2012

(86) International application number:
PCT/JP2012/051297

(87) International publication number:
WO 2013/111255 (01.08.2013 Gazette 2013/31)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(71) Applicant: Canon Kabushiki Kaisha
Tokyo 146-8501 (JP)

(72) Inventors:
• OGURA Takao
  Tokyo 146-8501 (JP)
• ITO Nobuhiro
  Tokyo 146-8501 (JP)

(74) Representative: TBK
Bavariaring 4-6
80336 München (DE)

(54) **RADIATION TARGET AND METHOD OF MANUFACTURING SAME**

(57) Provided are a radiation emission target and a radiation generating apparatus that reduce the variation in the output due to operation and temperature history by maintaining stable adhesion of the layered radiation target and achieve stable radiation emission characteristics.

The radiation target includes a supporting substrate, a target layer that emits a radiation when irradiated with an electron beam, and an interlayer located between the supporting substrate and the target layer. The interlayer has a thickness of 1 $\mu$m or less and contains titanium as a main component. At least part of the titanium shows the $\beta$-phase at 400°C or less.

## FIG. 1

**Description**

Technical Field

The present invention relates to a transmission-type radiation target that is suitable for diagnostic applications, nondestructive radiography, and the like in the fields of medical and industrial devices and a method for producing the transmission-type radiation target.

Background Art

A well-known example of the radiation target is a transmission-type target. Since transmission-type targets have advantages in that an electron emission source, the target, and a radiation extraction window can be aligned in a line, the applications of the transmission-type targets in miniaturized, high-definition radiation generating apparatuses are expected.

PTL 1 discloses an anode including a beryllium substrate on which tungsten is disposed. PTL 1 also discloses a method for preventing separation of the tungsten from the beryllium substrate, which is caused by stress generated by a difference in linear expansion amount between the tungsten and the beryllium substrate, by disposing an interlayer composed of copper, chromium, iron, titanium, or the like therebetween. PTL 2 discloses a method for improving cooling efficiency for radiating the heat generated in a target layer by disposing an interlayer as a thermal diffusion layer between a metal base material composed of a copper alloy or a silver alloy and the target layer composed of a metal material such as molybdenum, chromium, tungsten, gold, silver, copper, or iron. The interlayer is composed of a mixture of copper or silver with diamond powder or titanium.

Citation List

Patent Literature

PTL 1: Japanese Patent Laid-Open No. 2000-306533
PTL 2: Japanese Patent Laid-Open No. 2002-93355

Summary of Invention

Technical Problem

Existing transmission-type targets having an interlayer sometimes show a gradual decrease in the output radiation intensity in test runs. Although the mechanism that causes the variation in output has not been clearly determined, it is presumably related to the change in adhesion of the interlayer.

An object of the present invention is to reduce the variation in the output radiation intensity by maintaining adhesion of a target layer over a prolonged period, and to obtain the stable output radiation in terms of intensity. Solution to Problem

A radiation target according to the present invention includes a supporting substrate, a target layer that emits radiation when irradiated with an electron beam, and an interlayer located between the supporting substrate and the target layer. The interlayer has a thickness of 1 $\mu$m or less and contains titanium as a main component. At least part of the titanium shows the $\beta$-phase at 400°C or less.

A method for producing a radiation target according to the present invention includes the steps of forming a first layer containing titanium and at least one metal selected from V, Nb, and Ta on a substrate; forming a second layer containing a target metal on the first layer; and performing a $\beta$-phase stabilization treatment in which the first layer is maintained at 600°C or more and 1600°C or less. Advantageous Effects of Invention

According to the present invention, it is possible to maintain stable adhesion between the supporting substrate and the target layer even over a prolonged period of operation, which results in a reduction in the variation in the output radiation intensity caused by temperature rise of the target layer. Thus, it is possible to provide a radiation target having highly-reliable radiation emission characteristics.

Brief Description of Drawings

[Fig. 1] Fig. 1 is a cross-sectional view illustrating a radiation target according to the present invention.

[Fig. 2] Fig. 2 is a cross-sectional view illustrating a radiation generating apparatus according to the present invention.

[Fig. 3A] Fig. 3A is a cross-sectional view illustrating another radiation target according to the present invention.

[Fig. 3B] Fig. 3B is a cross-sectional view illustrating another radiation target according to the present invention.

[Fig. 3C] Fig. 3C is a cross-sectional view illustrating another radiation target according to the present invention.

[Fig. 3D] Fig. 3D is a cross-sectional view illustrating another radiation target according to the present invention.

[Fig. 4A] Fig. 4A is a cross-sectional view illustrating a radiation generating tube according to the present invention.

[Fig. 4B] Fig. 4B is a cross-sectional view illustrating a radiation generating tube according to the present invention.

[Fig. 5] Fig. 5 is a block diagram of a measuring system for measuring the output radiation intensity of a radiation generating tube.

[Fig. 6] Fig. 6 is an equilibrium diagram of a Ti-V system.

[Fig. 7A] Fig. 7A is a block diagram illustrating a manufacturing process of a radiation target according to the present invention.

[Fig. 7B] Fig. 7B is a block diagram illustrating a manufacturing process of a radiation target according to the present invention.

[Fig. 7C] Fig. 7C is a block diagram illustrating a manufacturing process of a radiation target according to the present invention.

[Fig. 7D] Fig. 7D is a block diagram illustrating a manufacturing process of a radiation target according to the present invention.

[Fig. 7E] Fig. 7E is a block diagram illustrating a manufacturing process of a radiation target according to the present invention.

[Fig. 8] Fig. 8 is a block diagram of a radiography system according to the present invention.

Description of Embodiments

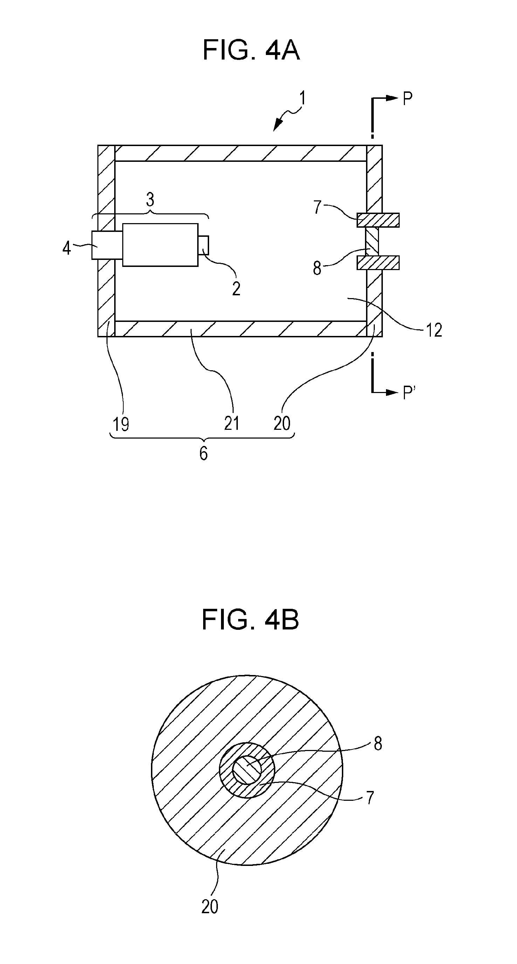

A radiation generating tube 1 will be now described. Figs. 4A and 4B are cross-sectional views illustrating the radiation generating tube 1 including a radiation target (hereafter, referred to as simply target) 8 according to the present invention. The radiation generating tube 1 includes at least an envelope 6 having an internal space 12 maintained at a vacuum, an electron emission source 3 disposed inside the envelope 6, and the target 8. The target 8 is disposed in the envelope 6 and arranged to face the electron emission source 3 so as to be irradiated with an electron beam 5 emitted from the electron emission source 3.

The degree of vacuum in the internal space 12 can be any degree of vacuum with which the mean free path can be maintained so that the electrons can at least fly between the electron emission source 3 and the target 8. The applicable degree of vacuum is 1E-4 Pa or less. The degree of vacuum in the internal space 12 can be selected accordingly in consideration of the type of the electron emission source 3 used. In cases where a cold cathode electron emission source or the like is used, the degree of vacuum is more preferably 1E-6 Pa or less. Optionally, in order to maintain the degree of vacuum in the internal space 12, a getter may be installed in the internal space 12 or in an additional space communicating with the internal space 12.

The electron emission source 3 disposed inside the envelope 6 can be any electron emission source as long as the amount of electron emission is controllable from the outside of the envelope 6. The hot cathode electron emission source or cold cathode electron emission source can be used accordingly. The electron emission source 3 can be electrically connected to a driving circuit 14 installed outside the envelope 6 so that the amount of the electron emission and the On-Off state of the electron emission can be controlled via a current introduction terminal 4 that penetrates through the envelope 6. The electron emission source 3 includes an electron emission portion 2. The electron emission portion 2 can be disposed in any position as long as the electrons emitted from the electron emission portion 2 impinge the below-described target 8. As shown in Figs. 4A and 4B, the electron emission portion 2 can be arranged to face the target 8. The electron emission portion 2 is maintained at a negative potential of -10 to - 200 kV with respect to the target 8. This causes an electron beam 5 emitted from the electron emission portion 2 to accelerate to the predetermined kinetic energy and to impinge the target 8. Optionally, a correction electrode connected to a correction circuit (not shown) may be disposed in order to correct the position irradiated with the electron beam or astigmatic aberration on the target 8.

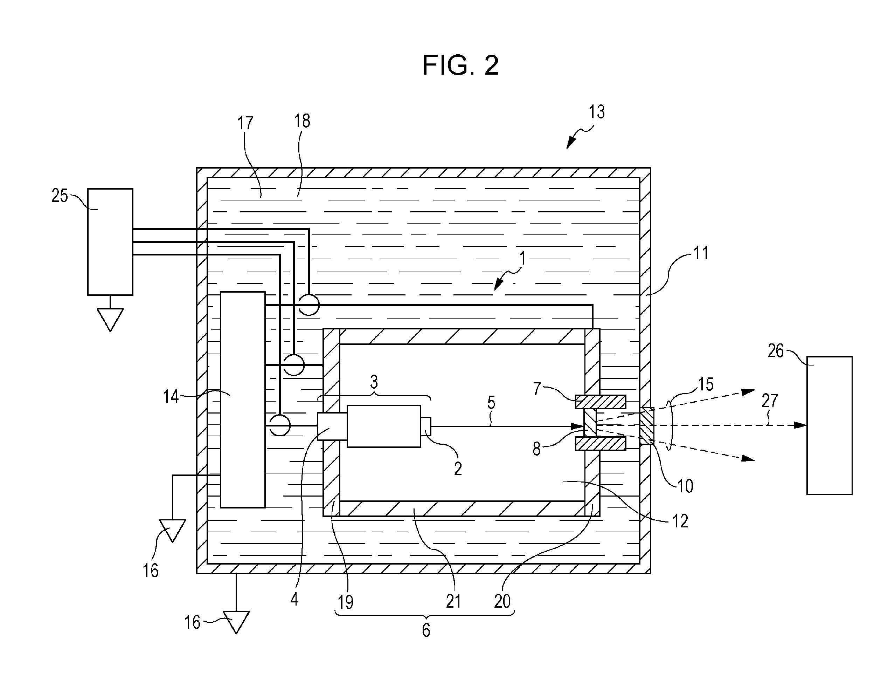

A radiation generating apparatus 13 will be now described. Fig. 2 is a cross-sectional view illustrating the radiation generating apparatus 13 that houses the radiation generating tube 1. The radiation generating apparatus 13 includes a package 11, the radiation generating tube 1 disposed inside the package 11, and a driving circuit 14 that drives the radiation generating tube 1. Optionally, the package 11 may include a radiation extraction window 10 composed of glass, beryllium, or the like that passes the radiation emitted from the target 8. When the radiation extraction window 10 is disposed, the radiation emitted from the radiation generating tube 1 is emitted outside through the radiation extraction window 10. In order to promote heat dissipation from the radiation generating tube 1, the radiation generating apparatus 13 may be provided by filling the internal space 17 of the package 11 with an insulating liquid 18 such as a silicone oil.

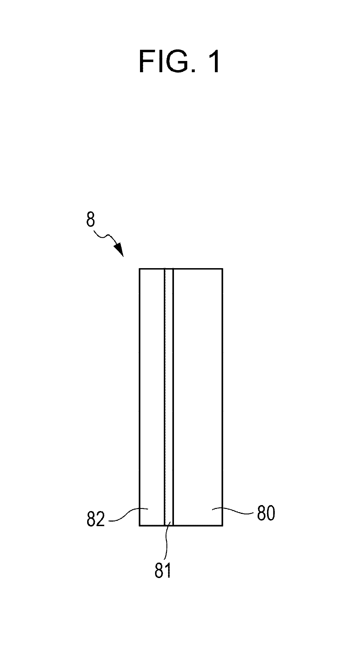

The target 8 will be now described. As shown in Fig. 1, the target 8 has a layered structure that includes at least three layers, namely, a target layer 82 that contains a target substance, an interlayer 81, and a supporting substrate 80 that are stacked on top of one another in this order.

The target layer 82 is located on one surface of the target 8, which is on the side irradiated with the electrons. The target layer 82 contains a heavy metal as the target substance. Metals having an atomic number of 39 or more, such as tungsten and gold, can be used as the target substance. The thickness of the target layer 82 is determined in consideration of the targeted radiation energy, the density of the target layer 82, and the accelerating voltage of incident electrons. The thickness of the target layer 82 can be 1 to 20 $\mu$m, for example.

The supporting substrate 80 structurally supports the target layer 82 that is a thin film. In order to maintain the strength of the layered body, the supporting substrate preferably has a thickness (thickness of substrate) of 100 $\mu$m or more. More preferably, the supporting substrate 80 has a thickness of 500 $\mu$m or more, because heat locally generated in the target layer 82 can be released outside the target 8 efficiently. When the supporting substrate 80 contains a light element such as beryllium, graphite, or diamond as a main component, a transmission-type target 8 including the supporting substrate 80 functioning as a radiation-transmissive member can be formed. The transmission-type target 8 allows forward radiation, which is emitted from the surface of the target 8 that is on the opposite side (hereafter, referred to as forward) to the side irradiated with the electron beam 5 (hereafter, referred to as backward), to exit from the radiation generating tube 1 or the radiation generating apparatus 13. When the target 8 is made transmissive, the maximum thickness of the supporting substrate 80 is determined in consideration of the radiation transmittance of the supporting substrate. For example, when the transmission-type target 8 includes a supporting substrate 80 composed of diamond, the supporting substrate preferably has a thickness of 2 mm or less from the viewpoint of radiation transmittance. Since diamond has a high melting point, low density, and high thermal conductivity, diamond is a particularly preferable material that can be used for the supporting substrate 80 of the transmission-type target 8. The diamond used for the supporting substrate 80 may have any crystal structure, such as a polycrystal or a single crystal structure and is preferably a single-crystal diamond from the viewpoint of thermal conductivity.

The interlayer 81 will be now described. As shown in Fig. 1, the interlayer 81 is disposed as an adhesive layer that improves adhesion between the target layer 82 and the supporting substrate 80. The interlayer 81 has two connection interfaces respectively connected to the target layer 82 and the supporting substrate 80.

When the interlayer 81 has an excessively small thickness, the anchoring force between the supporting substrate 80 and the target layer 82 become insufficient and cannot maintain adhesion therebetween. Accordingly, the interlayer 81 preferably has a thickness of at least 1 nm or more, or about 10 layers of atoms or more. In contrast, when the interlayer 81 has an excessively large thickness, the temperature change during the radiation output of the target 8 causes the stresses at each of the interfaces of the layers constituting the target 8 due to the difference in linear expansivity between the supporting substrate 80 and the target layer 82. This may result in poor adhesion in microscopic scale. Accordingly, the interlayer 81 preferably has a thickness of 1 $\mu$m or less. The interlayer 81 also serves as a heat transfer layer that transfers the heat generated in the target layer during the radiation output of the target 8 to the supporting substrate 80 efficiently. Consequently, an excessively large thickness of the interlayer 81 results in poor thermal conductivity, which causes the target 8 to be superheated during the radiation output. This may cause a variation in the output radiation intensity. Accordingly, the interlayer 81 more preferably has a thickness of 0.1 $\mu$m or less. Note that "during the radiation output" refers to the state in which the target layer 82 is irradiated with the electron beam 5 emitted from the electron emission source 3 and emitting radiation with the predetermined intensity.

The material for the interlayer 81 needs to be a material with which a sufficient adhesion can be achieved at the connection interfaces with the target layer 82 and with the supporting substrate 80. In addition, in order to maintain a layered structure with the target layer 82 that is to be heated up to about 1000°C, the material for the interlayer 81 is required to have heat resistance so as not to melt during the operation of the target 8. The interlayer 81 is characterized in that the interlayer 81 contains titanium as a main component and at least part of the titanium shows the $\beta$-phase as a low-temperature phase of 400°C or less. The interlayer 81 having such characteristics satisfies the above requirements of heat resistance and can maintain adhesion of the target 8 and good heat dissipation even when the target 8 is subjected to cyclic temperature history between in-operation and at-rest. As a result, the target 8 shows an effect of maintaining a high output stability over a prolonged period.

Pure titanium exists in two phases having a transformation temperature of 882°C in a temperature region of its melting point of 1670°C or less. One is a low-temperature phase referred to as the $\alpha$-phase, which is shown in a lower temperature region of 882°C or less and has a hexagonal close-packed crystal structure. The other is a high-temperature phase referred to as the $\beta$-phase, which is shown in a higher temperature region of 882°C or more and having a body-centered cubic crystal structure. In the present invention, pure titanium refers to titanium with a purity of 100%, which contains no metal element that forms an alloy with titanium in the composition. In accordance with the temperature history in which the target layer 82 is heated up to about 1000°C during operation, the titanium contained in the interlayer repeatedly undergoes a phase transition from the $\alpha$-phase to the $\beta$-phase in the heating-up process and a phase transition from the $\beta$-phase to the $\alpha$-phase in the cooling-down process.

The inventors of the present invention have determined the characteristics of the interlayer that had experienced a plurality of operational histories, and acquired the knowledge that a target that has experienced a plurality of operational histories shows a gradual decrease in radiation output, that the interlayer is a polycrystal including a plurality of grains, and that an interlayer of the target that has experienced a plurality of operation histories has a coarse grain size, which is related to the phase transition from the β-phase to the α-phase that occurs in the cooling-down process.

On the basis of this knowledge, the inventors of the present invention have found that the grains of the interlayer 81 containing titanium as a main component can be prevented from being coarse by configuring the interlayer 81 to show the β-phase as a low-temperature phase, and thereby adhesion of the target 8 can be maintained even when the target has experienced a plurality of operational histories.

The interlayer 81 showing the β-phase as a low-temperature phase includes an interlayer in which not necessarily all of the titanium shows the β-phase, but part of the titanium shows the β-phase. The form in which part of the titanium shows the β-phase includes the form in which the α-phase and β-phase coexist as an eutectoid. Note that, in the present invention, the low-temperature phase refers to a phase in a temperature range of 400°C or less, but not a specific phase (α-phase or β-phase) of titanium. The temperature of 400°C is a reference temperature associated with the boundary temperature between in-operation and at-rest temperatures of the target 8.

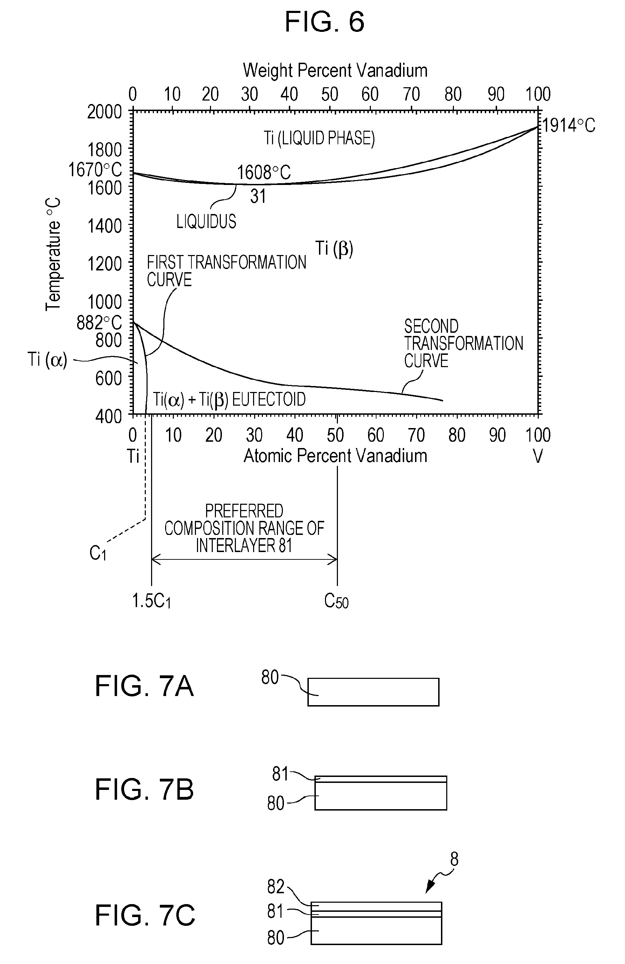

In order to show the β-phase as a low-temperature phase, the interlayer 81 containing titanium may have a composition containing a β-phase-stabilizing metal as a trace component as well as titanium as a main component. In addition, the interlayer 81 may be composed of an alloy of titanium and a β-phase-stabilizing metal. The β-phase-stabilizing metal is a metal that, when being added to pure titanium, has an effect of lowering the phase transformation temperature of titanium at which the titanium changes from being in a state containing only the α-phase to being in a state containing the β-phase so as to be less than the phase transformation temperature of pure titanium. Referring to Fig. 6, the β-phase-stabilizing metal will be now described in detail with vanadium as an example. Fig. 6 is an equilibrium diagram of the titanium-vanadium system. The liquidus starts at a point at 1670°C at which the vanadium content is 0 atm% (pure titanium), passes through a point at 1608°C at which the vanadium content is 31 atm%, and connects to a point at 1914°C at which the vanadium content is 100 atm% (pure vanadium). When operating in the temperature range below the liquidus, the target 8 maintains adhesion between the layers because the interlayer 81 thereof is not molten. In pure titanium (vanadium content: 0 atm%) shown in Fig. 6, two branch curves extend from the α-β phase transition point of 882°C in the direction of higher vanadium content. According to one of the branch curves (referred to as first transformation curve) lying on the lower temperature side, titanium shows only the α-phase when the vanadium content is less than that of any composition lying on the first transformation curve. In contrast, when the vanadium content is more than that of any composition lying on the first transformation curve, the titanium shows a phase in which both the α-phase and β-phase coexist as an eutectoid in a ratio based on the vanadium content. According to the other branch curve (referred to as second transformation curve) lying on the higher temperature side, titanium shows a phase in which both the α-phase and β-phase coexist as an eutectoid in a ratio based on the vanadium content when the vanadium content is less than that of any composition lying on the second transformation curve. In contrast, when the vanadium content is more than that of any composition lying on the second transformation curve, titanium shows only the β-phase.

As shown above, the addition of vanadium to pure titanium modifies the phase-transition temperature characteristics in terms of lowering the α-β phase-transition temperature (phase transition point) so as to be less than that of pure titanium, that is, 882°C. Therefore, vanadium is a β-phase-stabilizing metal for titanium.

Fig. 6 illustrates only the temperature region of 400°C or more. In the low-temperature region of less than 400°C, no significant change is observed compared with the temperature dependency of the first transformation curve in the temperature region of more than 400°C. In addition, in order to determine the composition of the interlayer 81, the behavior of the first transformation curve at 400°C or more can be sufficiently applied. Thus, the temperature region less than 400°C in the equilibrium diagram is omitted.

The maximum content of β-phase-stabilizing metal in the interlayer 81 is preferably 50 atm% or less, which means that the interlayer 81 contains titanium as a main component and β-phase-stabilizing metal as a trace component. The interlayer 81 needs to contain titanium as a main component and β-phase-stabilizing metal as a trace component so that the interlayer 81 achieves static adhesion to the target layer 82 and to the supporting substrate 80. Static adhesion refers to adhesion between layers that has no relation to the temperature history but that is mainly governed by the compatibility between the materials respectively contained in each layer.

The minimum content of β-phase-stabilizing metal in the interlayer 81 can be determined from the first transformation curve. Specifically, in order to obtain dynamic adhesion, the interlayer 81 preferably contains β-phase-stabilizing metal in an amount of 1.5 times or more the minimum β-phase-stabilizing metal content with which the α-phase titanium and the β-phase titanium coexist as an eutectoid at 400°C. Dynamic adhesion refers to adhesion between layers that changes with the temperature history upon the occurrence of a phase transition.

The β-phase-stabilizing metal for titanium is not limited to the above vanadium (V) and other examples thereof include niobium (Nb) and tantalum (Ta). In other words, the β-phase-stabilizing metal contained in the interlayer 81 of the target 8 is at least one metal selected from V, Nb, and Ta. The interlayer 81 may contain other elements as long as the effect of lowering the β-α phase transition temperature of pure titanium is not impaired.

The minimum vanadium, niobium, and tantalum contents with which the α-phase titanium and the β-phase titanium coexist as an eutectoid at 400°C are 2.2 atm%, 1.8 atm%, and 2.0 atm%, respectively, which are almost the same content. Thus, by containing 3.3 atm% or more and 50 atm% or less of the β-phase-stabilizing metal, the interlayer 81 can show the β-phase as a low-temperature phase stably regardless of the type of the β-phase-stabilizing metal.

When the interlayer 81 is composed of a polycrystal with an average grain size of 0.1 μm or less in the in-plane direction of the interlayer 81, coarsening of the grains of titanium may be prevented to a higher degree even in the cases where the interlayer 81 has a long operational and temperature history.

The method for producing the target 8 will be now described with reference to Figs. 7A to 7E. As shown in Fig. 7A, a substrate (supporting substrate) 80 is prepared. Then, as shown in Fig. 7B, a first layer (interlayer) 81 is formed on the substrate 80. As a method for forming the first layer, dry-deposition techniques such as sputtering, vacuum deposition, and CVD and a method that includes performing a wet-deposition technique such as spin-coating or ink-jet printing and subsequently baking the resultant layer can be applied. In the step of preparing the substrate 80, at least the surface on which the first layer 81 is to be formed is preferably cleaned to remove organic matter prior to deposition. Then, as shown in Fig. 7C, a second layer (target layer) 82 is formed on the first layer. As a method for forming the second layer, a sputtering method, vacuum deposition, CVD method, or the like can be applied accordingly.

The amount of each metal component added to the substrate 80 in the step of forming the first layer in the method for producing the target according to the present invention will be now described. The preferred β-phase-stabilizing metal concentration $C_\beta = [M_\beta]/([M_\beta] + [M_{Ti}])$ in the interlayer 81 is represented by the following general formula (1):

$$0.033 \leq [M_\beta]/([M_\beta] + [M_{Ti}]) \leq 0.5 \quad \text{general formula (1)}$$

where $[M_\beta]$ is the β-phase-stabilizing metal concentration in the interlayer 81 mentioned above, and $[M_{Ti}]$ is the titanium concentration in the interlayer 81.

By transforming the general formula (1) into a formula for the content ratio $[M_\beta]/[M_{Ti}]$, the general formula (2) can be uniquely obtained.

$$0.035 \leq [M_\beta]/[M_{Ti}] \leq 1 \quad \text{general formula (2)}$$

Thus, the method for producing the target according to the present invention includes setting the amount (corresponding to $[M_\beta]$) of at least any metal selected from vanadium, niobium, and tantalum added to the substrate 80 to be 0.035 or more and 1 or less in terms of atomic ratio relative to the amount (corresponding to $[M_{Ti}]$) of titanium added to the substrate 80 in the step of forming the first layer.

The method for producing the target according to the present invention includes performing the below-described β-phase stabilization treatment at least on the first layer 81. The β-phase stabilization treatment step includes heating the first layer 81 and thereby gives the first layer an effect of stably maintaining a composition containing titanium that shows the β-phase as a low-temperature phase. The β-phase stabilization treatment step includes maintaining the first layer 81 in the temperature range of 600°C or more and 1600°C or less for a predetermined time. More specifically, the heating treatment includes at least one of the following treatments: a solution treatment in which the first layer 81 is maintained in the temperature range of 900°C or more and 1600°C or less for a predetermined time and then rapidly cooled and an age hardening treatment in which the first layer 81 is maintained in the temperature range of 600°C or more and 880°C or less for a predetermined time. Selection of the solution treatment and the age hardening treatment can be made accordingly in consideration of heat resistance or the like of the target 8 or other members of the radiation generating tube 1.

The β-phase stabilization treatment step may be performed in the step of forming the first layer 81, that is, before the step of forming the second layer in the production process for the target 8. This is because diffusion at the interface between the supporting substrate 80 and the interlayer 81 is thereby promoted, which selectively improves adhesion between the supporting substrate 80 and the interlayer 81.

The β-phase stabilization treatment step may be performed in the step of forming the second layer 82 in the production process for the target 8. This is because the migration of the target material on the first layer in the deposition process of the second layer is thereby promoted, which improves adhesion between the interlayer 81 and the target layer 82.

The β-phase stabilization treatment step may be performed after the step of forming the second layer 82 in the production process for the target 8. This is because the residual stress generated between layers due to the difference in linear expansivity between the stacked layers of the target 8 is thereby reduced, which reduces the distortion and separation of the layered target.

The heating time for the solution treatment may be determined in consideration of the type of material or the thicknesses of the substrate, first layer, and second layer. For example, the heating time for the solution treatment can be in the range of 10 minutes to 10 hours. The heating time for the age hardening treatment can be in the range of 20 minutes to 20 hours.

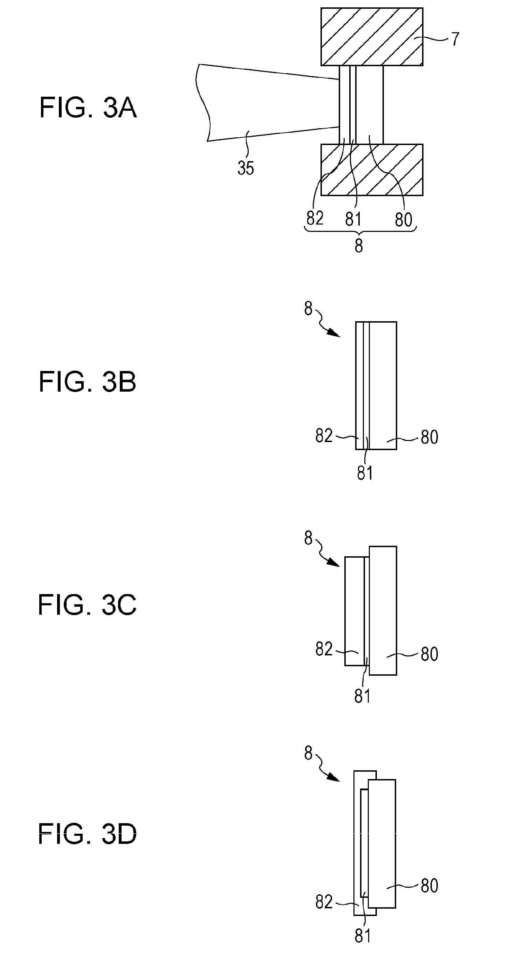

The manner in which the interlayer 81 and the target layer 82 are stacked on the supporting substrate 80 is not limited to that in which the entirety of one surface of the supporting substrate 80 is covered as shown in Fig. 1 but may be any of the covering techniques shown in Figs. 3B to 3D. With regards to the covering areas of the interlayer 81 and the target layer 82, it is preferable in order to prevent the supporting substrate from becoming charged, to cover the supporting substrate 80 with the interlayer 81 so that the covered area contains at least the area on the target 8 irradiated with a bundle of the electron beam 35 as shown in Fig. 3A. It is preferable in terms of adhesion to form the covering area of the target layer 82 so as to be the same as or included in the covering area of the interlayer 81. Optionally, according to the present invention, in consideration of the electrical connection to the shield 7 or an anode member 21, a portion with which the shield 7 and the target layer are electrically connected to each other through a conductive connecting member (not shown), may be formed in the covering (deposition) area of the interlayer 81.

Examples of available methods for fixing the target 8 to the shield 7 include a method using a conductive connection member such as silver solder (not shown) and a method of pressure-bonding.

The radiation generating apparatus 13 and the radiation generating tube 1 may include not only one each of electron emission source 3 and target 8 as shown in Fig. 2 but a plurality of each of electron emission source 3 and target 8. In the latter case, a plurality of radiation beams may be emitted independently of or in collaboration with each other.

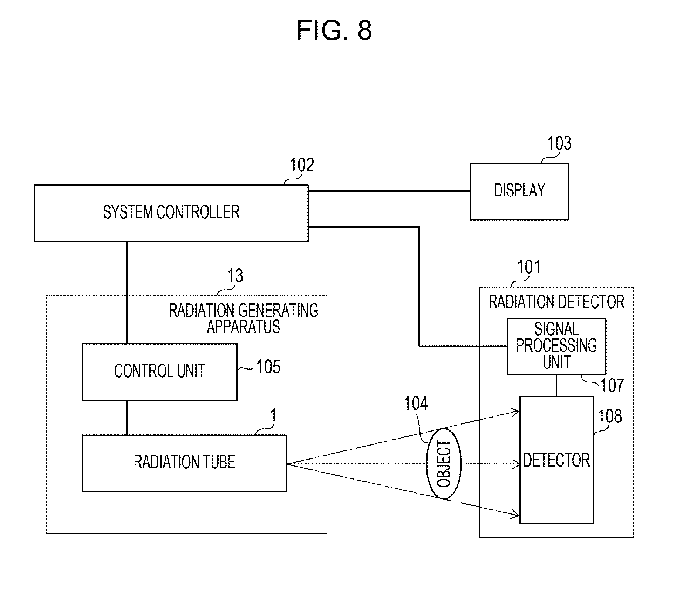

Fig. 8 is a block diagram illustrating a radiography system according to the present invention. A system controller 102 performs collaborative control of a radiation generating apparatus 13 and a radiation detector 101. Under the control by the system controller 102, a control unit 105 outputs various control signals to a radiation tube 1. The control signals control the state of radiation emitted from the radiation generating apparatus 13. The radiation emitted from the radiation generating apparatus 13 passes through an object 104 and is detected with a detector 108. The detector 108 converts the detected radiation into a picture signal and outputs the picture signal to a signal processing unit 107. Under the control by the system controller 102, the signal processing unit 107 performs predetermined signal processing on the picture signal and outputs the processed picture signal to the system controller 102. On the basis of the processed picture signal, the system controller 102 outputs a display signal for displaying a picture on the display 103. The display 103 displays a picture based on the display signal as a captured picture of the object 104 on a screen.

EXAMPLES

(First example)

A high-pressure synthetic diamond produced by Sumitomo Electric Industries, Ltd. was prepared as a supporting substrate 80 as shown in Fig. 7A. The supporting substrate 80 had a disc-shape (cylindrical shape) with a diameter of 5 mm and a thickness of 1 mm. A UV-ozone asher treatment was performed in advance on the supporting substrate 80 to remove organic matter present on the surface thereof.

Then, as shown in Fig. 7B, an interlayer 81 composed of titanium and niobium was formed on one surface of the two circular surfaces of the supporting substrate 80 with a diameter of 1 mm by a sputtering method so as to have a thickness of 100 nm. The deposition of the interlayer 81 by the sputtering method was performed using sputtering targets composed of titanium and niobium and Ar as a carrier gas. During the deposition, the supporting substrate 80 was placed on a stage inside a deposition device (not shown) and subjected to substrate heating up to 260°C by a heater built in the stage. The deposition rate of the interlayer 81 was controlled so that the amount of niobium added to the supporting substrate 80 per unit time was 0.821 (in terms of atomic ratio) relative to the amount of titanium added to the supporting substrate 80 per unit time. The control of the deposition rate was performed by controlling the input power to each sputtering target.

Then, as shown in Fig. 7C, a target layer 82 composed of tungsten was formed on the interlayer 81 by sputtering so as to have a thickness of 7 $\mu$m. The deposition of the target layer 82 by the sputtering method was performed continuously without ventilation of the atmosphere in the deposition device using Ar as a carrier gas. During the deposition of the target layer 82, the substrate 80 was subjected to substrate heating up to 260°C as in the deposition of the interlayer 81.

Next, the layered body including the supporting substrate 80, the interlayer 81, and the target layer 82 being stacked on top of one another in this order was put into an image furnace (not shown) evacuated to a degree of vacuum of 1E-5 Pa. The layered body was then maintained within the image furnace at 700°C for 1 hour. After the heating step, the image furnace was cooled down to room temperature over 2 hours and ventilated. Then, the layered body was taken out. Between the step of forming the target layer 82 and the step of performing β-phase stabilization treatment, the layered body was put into the image furnace without introduction of air.

As described above, a target 8 that included the supporting substrate 80, the interlayer 81, and the target layer 82 being stacked on top of one another in this order was manufactured.

The interlayer 81 and the target layer 82 were formed in a multilayer so as to respectively have predetermined thicknesses by controlling the deposition time in accordance with predetermined calibration curve data based on the relationship between thickness and deposition time when each layer was formed as a single layer. The measurement of thickness for determining the calibration curve data was made using spectroscopic ellipsometer UVISEL ER produced by HORIBA, Ltd.

The resulting target 8 was die-cut to form intermediate samples (not shown). The intermediate samples were subjected to mechanical polishing and FIB processing to be processed into a size so that the target layer 82, the interlayer 81, and the interface between the interlayer and the supporting substrate 80 were included therein. Thus, a cross-section specimen S1 was prepared. As in the case of preparing the cross-section specimen S1, the intermediate samples were processed using FIB processing and a SIMS detector in combination to be processed so that the interlayer 81 stacked on the supporting substrate 80 was exposed. Thus, a film-surface specimen S2 was prepared.

The distribution of the composition and bonding of each layer in the cross-section specimen S1 was visualized on a map using a transmission electron microscope (TEM) and electron beam spectrometry (energy dispersive X-ray spectrometry: EDX) in combination. It was thereby confirmed that a carbon-predominant region corresponding to the supporting substrate 80, titanium-predominant region corresponding to the interlayer 81, and tungsten-predominant region corresponding to the target layer 82 were stacked. The distribution of the composition of the interlayer 81 in the film-surface specimen S2 was visualized on a map using the transmission electron microscope (TEM) and electron beam spectrometry (energy dispersive X-ray spectrometry: EDX) in combination. It was thereby confirmed that titanium and niobium were distributed in the same region as each other in both interlayers 81 of the cross-section specimen S1 and the film-surface specimen S2.

The thickness of the interlayer 81 in the cross-section specimen S1 was measured using the transmission electron microscope (TEM) and found to be 100 nm.

Then, crystallinity, grain size, and composition distribution of the cross-section specimen S1 and the film-surface specimen S2 were evaluated by bright-field observation and dark-field observation using the transmission electron microscope, and by electron beam spectrometry (energy dispersive X-ray spectrometry: EDX) in combination. As a result, a plurality of grains were observed in the interlayer 81. The average grain size thereof was 85 nm. It was confirmed that each grain contained titanium and niobium. The titanium and niobium contents of the interlayer 81 were 54.9 atm% and 45.1 atm%, respectively.

The crystal form of the grains in the cross-section specimen S1 and the film-surface specimen S2 was evaluated by bright-field observation and dark-field observation using the transmission electron microscope, by electron diffraction (ED), and by electron beam spectrometry (energy dispersive X-ray spectrometry: EDX) in combination. The samples were maintained at 400°C during evaluation. From the result of the electron diffraction, it was confirmed that a body-centered cubic crystal structure predominated in titanium contained in the interlayer 81. In other words, it was confirmed that the interlayer 81 of this Example showed the β-phase at 400°C. It was also confirmed that, even when the samples were kept at a room temperature of 25°C, the interlayer 81 showed the β-phase similarly to the result under the heating condition of 400°C.

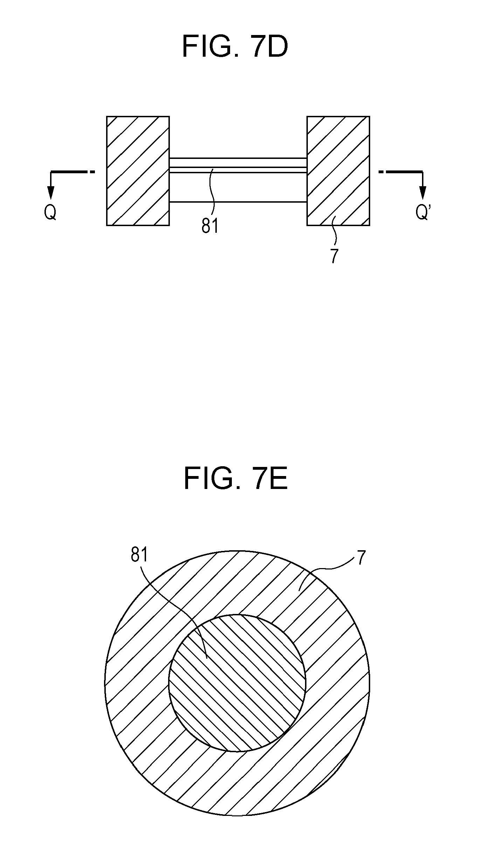

Then, as shown in Figs. 7D and 7E, the target 8 was fixed with silver solder (not shown) inside the cylinder of a cylindrical shield 7 composed of tungsten. Note that Fig. 7E is a cross-sectional view illustrating a unit including the target 8 and the shield 7 shown in a longitudinal cross-sectional view in Fig. 7D taken along the imaginary plane Q-Q'.

Next, as shown in Figs. 4A and 4B, the unit including the target 8 and the shield 7, and the electron emission source 3 including the electron emission portion 2 were connected to the envelope 6 so that the target layer 82 (not shown) and the electron emission portion 2 faced each other. The envelope 6 was formed by joining a cathode 19 composed of copper, an anode 20 composed of copper, and an insulating tube 21 that had a cylindrical shape and composed of ceramics with one another with silver solder (not shown). The electron emission source 3 was connected to the cathode 19 through a current introduction terminal 4 prior to formation of the envelope 6. The target 8 was connected to the anode 20 through the shield 7 prior to formation of the envelope 6. An impregnated thermionic-emission gun was used as the electron emission source 3. The envelope 6 was evacuated to a degree of vacuum of 1E-5 Pa with an exhaust pipe and an evacuator (not shown) and the exhaust pipe was then sealed. Thus, the radiation generating tube 1 was manufactured. Note that Fig. 4B is a cross-sectional view illustrating the radiation generating tube 1 shown in a longitudinal cross-sectional view in Fig. 4A taken along imaginary plane P-P'.

As shown in Fig. 2, the radiation generating tube 1 was housed in a package 11 composed of brass together with a driving circuit 14. The driving circuit 14 and the radiation generating tube 1 were electrically connected to each other. The package 11 was filled with silicone oil having a relative dielectric constant of 2.8 (at room temperature, 1 MHz) and sealed with a brazen lid. Thus, the radiation generating apparatus 13 was manufactured. In addition, the radiation generating apparatus 13 of this Example included a diamond substrate with a thickness of 300 $\mu$m that was disposed in the opening facing the supporting substrate 80 of the shield 7 and serves as a radiation extraction window 10.

As shown in Fig. 2, a measuring system for determining the intensity of radiation emitted from the manufactured radiation generating apparatus 13 was constructed as below. Dielectric probes were coupled with respective connecting lines between the driving circuit 14 and the radiation generating tube 1. The dielectric probes were connected to a discharge counter 25 installed outside the package 11. A dosimeter 26 was disposed on the extension connecting the centers of the electron emission portion 2 and the target 8 at a distance of 100 cm from the surface of the supporting substrate 80 in contact with the air toward the air side. The dosimeter 26 included an ionization chamber and was disposed in order to measure the time-integrated doses. The discharge counter 25, the driving circuit 14, and the package 11 were maintained at ground potential through grounding terminals 16.

The driving conditions during the stability evaluation of the radiation generating apparatus 13 were as follows: an accelerating voltage applied to the target 8 relative to the electron emission portion 2 of +90 kV, a current density of electrons on the irradiated target layer 82 of 4 mA/mm$^2$, and a pulse driving intermittent electron irradiation at 10 second intervals. During the stability evaluation of the output radiation intensity, a current from the target layer 82 to the grounding electrode was detected and the current density of electrons on the irradiated target layer was controlled to have a variation coefficient of 1% or less using a negative feedback circuit (not shown). During the running evaluation of the radiation generating apparatus 13, stable running without discharge was confirmed using a running discharge counter 25.

The stability evaluation of the output radiation intensity of the radiation generating apparatus 13 was performed as follows: The electron emission source 3 was subjected to the pulse driving under the above conditions. At every 100 hours, the radiation generating apparatus was temporarily stopped for 2 hours till the entirety of the radiation generating tube 1 reached a temperature equal to room temperature and the output radiation intensity was determined with a radiation dosimeter 26. The output radiation intensity was an average intensity of the signal detected by the radiation dosimeter 26 over 1 second. The stability evaluation was conducted using the coefficient of variation obtained by normalizing the output radiation intensity observed in each time step with the initial output radiation intensity. These evaluation results are shown in Table 1.

[Table 1]

| Cumulative operating time | 0h (initial) | 100h | 200h | 300h |
|---|---|---|---|---|
| Ratio of change in output radiation intensity | 1 | 0.98 | 0.97 | 0.96 |

It was confirmed that the radiation generating apparatus 13 including the target 8 of this Example provides stable output radiation intensity even in cases where there is a long driving history.

(Second example)

In this Example, a target 8 was manufactured as in the first example, except that the deposition rate was controlled in the step of forming the interlayer 81 so that the amount of niobium added on the supporting substrate 80 per unit time was 0.176 (in terms of atomic ratio) relative to the amount of titanium added to the supporting substrate 80 per unit time.

Intermediate samples, a cross-section specimen S1, and a film-surface specimen S2 were prepared as in Example 1 using the target 8 manufactured in this Example.

As in the first example, mapping of the distribution of composition and bonding was carried out for each layer of the prepared cross-section specimen S1 using the TEM and EDX in combination. It was thereby confirmed that a carbon-predominant region corresponding to the supporting substrate 80, titanium-predominant region corresponding to the interlayer 81, and tungsten-predominant region corresponding to the target layer 82 were stacked. Next, as in the first example, mapping of the composition distribution of the interlayer 81 in the film-surface specimen S2 was carried out using the TEM and EDX in combination. It was thereby confirmed that titanium and niobium were distributed in the same region as each other in both interlayers 81 of the cross-section specimen S1 and the film-surface specimen S2.

As in the first example, the thickness of the interlayer 81 in the cross-section specimen S1 was measured using the TEM and found to be 99 nm.

As in the first example, crystallinity, grain size, and composition distribution of the cross-section specimen S1 and the film-surface specimen S2 were evaluated by bright-field observation and dark-field observation using the TEM, and by EDX in combination. As a result, a plurality of grains were observed in the interlayer 81. The average grain size thereof was 103 nm. It was confirmed that each grain contained titanium and niobium. The titanium and niobium contents of the interlayer 81 were 85.0 atm% and 15.0 atm%, respectively.

As in the first example, the crystal form of the grains in the cross-section specimen S1 and the film-surface specimen S2 was evaluated by bright-field observation and dark-field observation using the TEM, by ED, and by EDX in combination. The samples were maintained at 400°C during evaluation. From the result of the electron diffraction, it was confirmed that the titanium contained in the interlayer 81 had a crystal form including both the grains with a body-centered cubic structure and the grains with a hexagonal close-packed structure. In other words, it was confirmed that the interlayer 81 in this Example was in the α-β eutectoid phase at 400°C and showed the β-phase. It was also confirmed that, even when the samples were kept at a room temperature of 25°C, the interlayer 81 was in the α-β eutectoid phase and showed the β-phase similarly to the result under the heating condition of 400°C.

As in the first example, as shown in Figs. 4A and 4B, a radiation generating tube 1 including the target 8 was manufactured. Then, as shown in Fig. 2, a radiation generating apparatus 13 including the radiation generating tube 1 was then manufactured.

As in the first example, the stability evaluation of the output radiation intensity was also conducted in this Example using the experimental system shown in Fig. 2. The results are shown in Table 2.

[Table 2]

| Cumulative operating time | 0h (initial) | 100h | 200h | 300h |
|---|---|---|---|---|
| Ratio of change in output radiation intensity | 1 | 0.97 | 0.96 | 0.95 |

It was confirmed that the radiation generating apparatus 13 including the target 8 of this Example provides stable output radiation intensity even in cases where there is a long driving history.

(Third example)

In this Example, a target 8 was manufactured as in the first example, except that the sputtering target composed of vanadium was used in place of that composed of niobium and that the deposition rate was controlled in the step of forming the interlayer 81 so that the amount of vanadium added on the supporting substrate 80 per unit time was 0.25 (in terms of atomic ratio) relative to the amount of titanium added on the supporting substrate 80 per unit time.

Intermediate samples, a cross-section specimen S1, and a film-surface specimen S2 were prepared as in Example 1 using the target 8 manufactured in this Example.

As in the first example, mapping of the distribution of composition and bonding was carried out for each layer of the prepared cross-section specimen S1 using the TEM and EDX in combination. It was thereby confirmed that a carbon-predominant region corresponding to the supporting substrate 80, titanium-predominant region corresponding to the interlayer 81, and tungsten-predominant region corresponding to the target layer 82 were stacked. Next, as in the first example, mapping of the composition distribution of the interlayer 81 in the film-surface specimen S2 was carried out using the TEM and EDX in combination. It was thereby confirmed that titanium and vanadium were distributed in the same region as each other in both the interlayers 81 of the cross-section specimen S1 and the film-surface specimen S2.

As in the first example, the thickness of the interlayer 81 in the cross-section specimen S1 was measured using the TEM and found to be 100 nm.

As in the first example, crystallinity, grain size, and composition distribution of the cross-section specimen S1 and the film-surface specimen S2 were evaluated by bright-field observation and dark-field observation using the TEM, and by EDX in combination. As a result, a plurality of grains were observed in the interlayer 81. The average grain size thereof was 91 nm. It was confirmed that each grain contained titanium and vanadium. The titanium and vanadium contents of the interlayer 81 were 80.2 atm% and 19.8 atm%, respectively.

As in the first example, the crystal form of the grains in the cross-section specimen S1 and the film-surface specimen S2 was evaluated by bright-field observation and dark-field observation using the TEM, by ED, and by EDX in combination. The samples were maintained at 400°C during evaluation. From the result of the electron diffraction, it was confirmed that the titanium contained in the interlayer 81 had a crystal form including both the grains with a body-centered cubic structure and the grains with a hexagonal close-packed structure. In other words, it was confirmed that the interlayer 81 in this Example was in the α-β eutectoid phase at 400°C and showed the β-phase. It was also confirmed that, even when the samples were kept at a room temperature of 25°C, the interlayer 81 was in the α-β eutectoid phase and showed the β-phase similarly to the result under the heating condition of 400°C.

As in the first example, as shown in Figs. 4A and 4B, a radiation generating tube 1 including the target 8 was manufactured. Then, as shown in Fig. 2, a radiation generating apparatus 13 including the radiation generating tube 1 was then manufactured.

As in the first example, the stability evaluation of the output radiation intensity was also conducted in this Example using the experimental system shown in Fig. 2. The results are shown in Table 3.

[Table 3]

| Cumulative operating time | 0h (initial) | 100h | 200h | 300h |
|---|---|---|---|---|
| Ratio of change in output radiation intensity | 1 | 0.97 | 0.97 | 0.96 |

It was confirmed that the radiation generating apparatus 13 including the target 8 of this Example provides stable output radiation intensity even in cases where there is a long driving history.

(Fourth example)

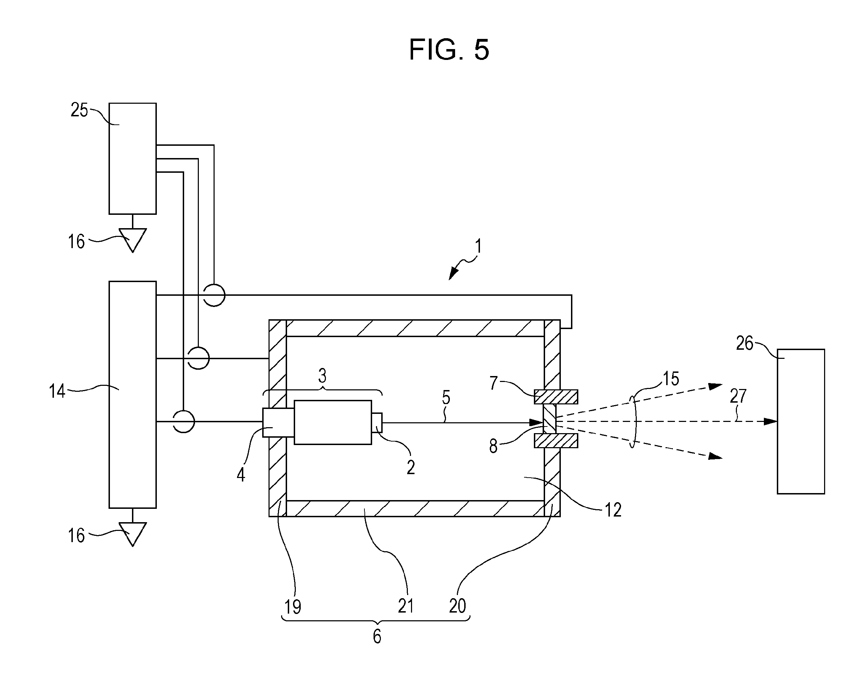

This Example employed the same method as in the first example, except that the stability evaluation of the output radiation intensity from the radiation generating tube 1 was conducted using the radiation generating tube 1 manufactured in the first example and the measuring system illustrated in Fig. 5. The results are shown in Table 4.

[Table 4]

| Cumulative operating time | 0h (initial) | 100h | 200h | 300h |
|---|---|---|---|---|
| Ratio of change in output radiation intensity | 1 | 0.97 | 0.97 | 0.96 |

It was confirmed that the radiation generating tube 1 including the target 8 of this Example provides stable output radiation intensity even in cases where there is a long driving history.

(Comparative example)

In this Comparative example, a target 48 was manufactured as in the first example, except that the deposition rate was controlled in the step of forming the interlayer 81 so that the amount of niobium added to the supporting substrate 80 per unit time was 0.010 (in terms of atomic ratio) relative to the amount of titanium added to the supporting substrate 80 per unit time.

The intermediate samples, the cross-section specimen S1, and the film-surface specimen S2 were prepared as in the first example using the target 48 manufactured in this Comparative example.

As in the first example, mapping of the distribution of composition and bonding was carried out for each layer of the prepared cross-section specimen S1 using the TEM and EDX in combination. It was thereby confirmed that a carbon-predominant region corresponding to the supporting substrate 80, titanium-predominant region corresponding to the interlayer 81, and tungsten-predominant region corresponding to the target layer 82 were stacked. Next, as in the first example, mapping of the composition distribution of the interlayer 81 in the film-surface specimen S2 was carried out using the TEM and EDX in combination. It was thereby confirmed that titanium and niobium are distributed in the same region as each other in both the interlayers 81 of the cross-section specimen S1 and the film-surface specimen S2.

As in the first example, the thickness of the interlayer 81 in the cross-section specimen S1 was measured using the TEM and found to be 99 nm.

As in the first example, crystallinity, grain size, and composition distribution of the cross-section specimen S1 and the film-surface specimen S2 were evaluated by bright-field observation and dark-field observation using the TEM, and by EDX in combination. As a result, a plurality of grains were observed in the interlayer 81. The average grain size thereof was 139 nm. It was confirmed that each grain contained titanium and niobium. The titanium and niobium contents of the interlayer 81 were 99.0 atm% and 1.0 atm%, respectively.

As in the first example, the crystal form of the grains in the cross-section specimen S1 and the film-surface specimen S2 was evaluated by bright-field observation and dark-field observation using the TEM, by ED, and by EDX in combination. The samples were maintained at 400°C during evaluation. From the result of the electron diffraction, it was confirmed that the titanium contained in the interlayer 81 had a crystal form including only grains with a hexagonal close-packed structure. In other words, it was confirmed that the interlayer 81 in this Comparative example shows the $\alpha$-phase at 400°C but not the $\beta$-phase. It was also confirmed that, even when the samples were kept at a room temperature of 25°C, the interlayer 81 showed the $\alpha$-phase but not the $\beta$-phase similarly to the result under the heating condition of 400°C. As in the first example, as shown in Figs. 4A and 4B, the radiation generating tube 41 including the target 8 was manufactured. Then, as shown in Fig. 2, the radiation generating apparatus 43 including the radiation generating tube 41 was then manufactured.

As in the first example, the stability evaluation of the output radiation intensity was also conducted in this Comparative example using the experimental system shown in Fig. 2. The results are shown in Table 5.

[Table 5]

| Cumulative operating time | 0h (initial) | 100h | 200h | 300h |
|---|---|---|---|---|
| Ratio of change in output radiation intensity | 1 | 0.95 | 0.91 | 0.88 |

It was confirmed that the radiation generating apparatus 13 including the target 8 of this Comparative example provides less stable output radiation intensity compared with that of Examples 1 to 4 in cases where there is a long driving history.

The present invention is not limited to the above-described embodiments, and various alternation or modification can be made without departing from the spirit and scope of the present invention. Accordingly, the appended claims are intended to define the scope of the present invention.

Reference Signs List

8 target
80 supporting substrate (substrate)
81 interlayer (first layer)
82 target layer (second layer)

**Claims**

1. A radiation target comprising a supporting substrate, a target layer that emits radiation when irradiated with an electron beam, and an interlayer located between the supporting substrate and the target layer,
   wherein the interlayer has a thickness of 1 $\mu$m or less and contains titanium as a main component, and wherein at least part of the titanium shows a $\beta$-phase at 400°C or less.

2. The radiation target according to Claim 1, wherein the interlayer contains a $\beta$-phase-stabilizing metal as a trace component, the $\beta$-phase-stabilizing metal, when added to pure titanium, lowering a phase transformation temperature of titanium at which the titanium changes from being in a state containing only an $\alpha$-phase to being in a state containing the $\beta$-phase so as to be less than a phase transformation temperature of pure titanium.

3. The radiation target according to Claim 2, wherein the interlayer is composed of an alloy of the titanium and the $\beta$-phase-stabilizing metal.

4. The radiation target according to Claim 2 or 3, wherein the $\beta$-phase-stabilizing metal is at least one metal selected from V, Nb, and Ta.

5. The radiation target according to any one of Claims 2 to 4, wherein the interlayer contains the $\beta$-phase-stabilizing metal in an amount of 1.5 times or more the minimum $\beta$-phase-stabilizing metal content with which the $\alpha$-phase titanium and the $\beta$-phase titanium coexist as an eutectoid at 400°C.

6. The radiation target according to any one of Claims 2 to 5, wherein the interlayer contains 3.3 atm% or more and 50 atm% or less of the $\beta$-phase-stabilizing metal.

7. The radiation target according to any one of Claims 1 to 6, wherein the interlayer is composed of a polycrystal having an average grain size of 0.1 $\mu$m or less measured in the in-plane direction of the interlayer.

8. The radiation target according to any one of Claims 1 to 7, wherein the interlayer has a thickness of 1 nm or more.

9. The radiation target according to any one of Claims 1 to 8, wherein the supporting substrate functions as a radiation-transmissive member that transmits at least part of the radiation emitted from the target layer.

10. A radiation generating tube comprising an envelope; an electron emission source that emits an electron beam, the electron emission source being located inside the envelope; and a radiation target that emits radiation when irradiated with the electron beam, wherein the radiation target is the radiation target according to any one of Claims 1 to 9.

11. A radiation generating apparatus comprising a package, a radiation generating tube disposed inside the package, and a driving circuit that drives the radiation generating tube, wherein the radiation generating tube is the radiation generating tube according to Claim 10.

12. A radiography system comprising the radiation generating apparatus according to Claim 11; a radiation detector that detects radiation emitted from the radiation generating apparatus and passing through an object; and a controller that performs collaborative control of the radiation generating apparatus and the radiation detector.

13. A method for producing a radiation target, the method comprising the steps of:

forming a first layer containing titanium and at least one metal selected from V, Nb, and Ta on a substrate;
forming a second layer containing a target metal on the first layer; and
performing a $\beta$-phase stabilization treatment in which the first layer is maintained at 600°C or more and 1600°C or less.

14. The method for producing a radiation target according to Claim 13, wherein the $\beta$-phase stabilization treatment includes at least one of a solution treatment in which the first layer is maintained at 900°C or more and 1600°C or less and an age hardening treatment in which the first layer is maintained at 600°C or more and 880°C or less.

15. The method for producing a radiation target according to Claim 14, wherein the solution treatment or the age hardening treatment is performed before the step of forming the second layer.

16. The method for producing a radiation target according to Claim 14, wherein the solution treatment or the age hardening treatment is performed in the step of forming the second layer.

17. The method for producing a radiation target according to Claim 14, wherein the solution treatment or the age hardening treatment is performed after the step of forming the second layer.

18. The method for producing a radiation target according to any one of Claims 13 to 16, wherein, in the step of forming the first layer, the amount of the at least one metal selected from V, Nb, and Ta added to the substrate is 0.035 or more and 1 or less in terms of atomic ratio relative to the amount of the titanium added to the substrate.

19. A method for producing a radiation generating tube including an envelope, an electron emission source that emits an electron beam, the electron emission source being located inside the envelope, and a radiation target that emits radiation when irradiated with the electron beam, wherein the radiation target is produced by the method for producing a radiation target according to any one of Claims 13 to 17.

20. A method for producing a radiation generating apparatus including a package, a radiation generating tube disposed inside the package, and a driving circuit that drives the radiation generating tube, wherein the radiation generating tube is produced by the producing method according to Claim 18.

# FIG. 1

# FIG. 2

EP 2 808 884 A1

FIG. 3A

FIG. 3B

FIG. 3C

FIG. 3D

# FIG. 4A

# FIG. 4B

# FIG. 5

# FIG. 6

Weight Percent Vanadium

Ti (LIQUID PHASE)

Ti (β)

FIRST TRANSFORMATION CURVE

SECOND TRANSFORMATION CURVE

LIQUIDUS

Ti (α)

Ti(α) + Ti(β) EUTECTOID

Atomic Percent Vanadium

PREFERRED COMPOSITION RANGE OF INTERLAYER 81

$C_1$

$1.5C_1$          $C_{50}$

## FIG. 7A

## FIG. 7B

## FIG. 7C

# FIG. 7D

81

7

Q

Q'

# FIG. 7E

81

7

EP 2 808 884 A1

# FIG. 8

102 SYSTEM CONTROLLER

103 DISPLAY

13 RADIATION GENERATING APPARATUS

CONTROL UNIT 105

1 RADIATION TUBE

104 OBJECT

101 RADIATION DETECTOR

SIGNAL PROCESSING UNIT 107

108 DETECTOR

## INTERNATIONAL SEARCH REPORT

| International application No. |
| --- |
| PCT/JP2012/051297 |

**A. CLASSIFICATION OF SUBJECT MATTER**
*H01J35/08*(2006.01)i, *C22C14/00*(2006.01)i, *H01J35/18*(2006.01)i

According to International Patent Classification (IPC) or to both national classification and IPC

**B. FIELDS SEARCHED**

Minimum documentation searched (classification system followed by classification symbols)
H01J35/08, C22C14/00, H01J35/18

Documentation searched other than minimum documentation to the extent that such documents are included in the fields searched
Jitsuyo Shinan Koho          1922–1996   Jitsuyo Shinan Toroku Koho   1996–2012
Kokai Jitsuyo Shinan Koho   1971–2012   Toroku Jitsuyo Shinan Koho   1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2009-99565 A  (Kratos Analytical Ltd.),<br>07 May 2009 (07.05.2009),<br>entire text; all drawings<br>& US 2009/0129551 A1   & EP 2048689 A1<br>& DE 602008002526 D    & AT 481729 T | 1-20 |
| A | JP 59-221947 A  (N.V. Philips Gloeilampenfabrieken),<br>13 December 1984 (13.12.1984),<br>entire text; all drawings<br>& US 4583243 A        & EP 127229 A1<br>& NL 8301838 A        & AU 2857684 A | 1-20 |

[X] Further documents are listed in the continuation of Box C.          [ ] See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 March, 2012 (14.03.12) | 27 March, 2012 (27.03.12) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| | International application No. |
|---|---|
| | PCT/JP2012/051297 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-12340 A  (General Electric Co.), 20 January 2011 (20.01.2011), entire text; all drawings & US 2010/0326571 A1    & EP 2281906 A1 & CA 2701314 A | 1-20 |
| A | JP 2010-255023 A  (Nippon Thermo Tech Kabushiki Kaisha), 11 November 2010 (11.11.2010), entire text; all drawings & US 2010/0276040 A1 | 13-20 |
| A | JP 2000-306533 A  (Toshiba Corp.), 02 November 2000 (02.11.2000), entire text; all drawings (Family: none) | 1-20 |
| A | JP 2002-93355 A  (Rigaku Denki Co., Ltd.), 29 March 2002 (29.03.2002), entire text; all drawings (Family: none) | 1-20 |

Form PCT/ISA/210 (continuation of second sheet) (July 2009)

**EP 2 808 884 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000306533 A
- JP 2002093355 A